Europäisches Patentamt

European Patent Office

Office européen des brevets

(11) Numéro de publication: **0 354 110**
A1

# (12) DEMANDE DE BREVET EUROPEEN

(21) Numéro de dépôt: **89402172.4**

(22) Date de dépôt: **31.07.89**

(51) Int. Cl.⁵: **B 64 C 31/06**
B 64 C 31/02, B 60 V 1/22

(30) Priorité: **02.08.88 FR 8810406**

(43) Date de publication de la demande:
**07.02.90 Bulletin 90/06**

(84) Etats contractants désignés:
**DE ES FR GB GR IT**

(71) Demandeur: **Meniri, Osman**
**4 Place des Aubépines**
**F-77420 Champs-Sur-Marne (FR)**

(72) Inventeur: **Meniri, Osman**
**4 Place des Aubépines**
**F-77420 Champs-Sur-Marne (FR)**

(74) Mandataire: **Bernasconi, Jean et al**
**CABINET LEMOINE ET BERNASCONI 13, Boulevard des Batignolles**
**F-75008 Paris (FR)**

(54) **Engin volant destiné à être tracté ou propulsé.**

(57) Afin de le rendre utilisable par tout individu en toute sécurité, on propose un engin volant qui comporte un ensemble comprenant une surface portante (6) et des moyens pour recevoir une personne au moins (4), reliés à ladite surface portante, caractérisé en ce qu'il comporte en outre au moins une poutre rigide (1) qui est reliée audit ensemble par l'une de ses deux extrémités et qui, à son autre extrémité, est agencée de manière à pouvoir être reliée à un engin motorisé terrestre ou nautique, les deux liaisons réalisées procurant chacune au moins un degré de liberté en rotation dans un plan vertical et l'une au moins des liaisons procurant au moins un degré de liberté supplémentaire, notamment en rotation dans un plan horizontal.

Fig.1

EP 0 354 110 A1

**Description**

## Engin volant destiné à être tracté ou propulsé.

L'invention a pour objet un engin volant qui comporte un ensemble comprenant une surface portante et des moyens pour recevoir une personne au moins, reliés à ladite surface portante.

La pratique du delta-plane, de l'ULM (Ultra Léger Motorisé), du parachute ascensionnel et analogue est, en raison de la technicité et des risques encourus, réservé à des individus spécialement formés. D'autre part, malgré l'attrait représenté par le vol à l'air libre, nombreux sont ceux qui y renoncent pour des raisons d'émotivité.

Il était donc intéressant de se pencher sur une adaptation de ces techniques en vue de mettre au point une technique à la portée du plus grand nombre et cela dans une parfaite sécurité.

L'invention a pour but de remédier à ces inconvénients en fournissant un engin volant exploitable par le plus grand nombre en toute sécurité.

Un objectif de l'invention est de fournir un engin réalisable à faible prix, notamment grâce à l'utilisation d'éléments tirés des techniques citées au début.

Un objectif encore de l'invention est de fournir un engin volant qui puisse décoller et atterrir à faible vitesse.

L'invention a pour objet un engin volant qui comporte un ensemble comprenant une surface portante et des moyens pour recevoir une personne au moins, reliés à ladite surface portante, caractérisé en ce qu'il comporte en outre au moins une poutre rigide qui est reliée audit ensemble par l'une de ses deux extrémités et qui, à son autre extrémité, est agencée de manière à pouvoir être reliée à un engin motorisé terrestre ou nautique, les deux liaisons réalisées procurant chacune au moins un degré de liberté en rotation dans un plan vertical et l'une au moins des liaisons procurant au moins un degré de liberté supplémentaire, notamment en rotation dans un plan horizontal.

Le degré de liberté en rotation dans un plan vertical qui est procuré par la liaison entre la poutre et l'engin motorisé permet le décollage, l'atterrissage et les variations de la hauteur du vol. Celui procuré par la liaison entre la poutre et l'ensemble a pour objectif d'assurer ou de contribuer au positionnement approprié dudit ensemble en profondeur. Le degré de liberté en rotation dans un plan horizontal qui est procuré par l'une quelconque au moins des deux liaisons permet surtout à l'engin volant de s'orienter en fonction du vent apparent et ainsi d'éviter que des forces trop élevées n'agissent sur l'engin motorisé et sur les articulations. D'autres degrés de liberté pourront être choisis en sus en fonction des capacités d'évolution apportées à l'utilisateur.

Cet engin volant peut être placé indifféremment à l'avant ou à l'arrière de l'engin motorisé auquel il est associé. La liaison entre la poutre et l'engin motorisé est assurée par un dispositif adapté aux possibilités d'attache offertes par ledit engin motorisé. Ce dispositif pourra être fixé à demeure ou non, étant entendu que, dans le premier cas au moins, la poutre peut être détachée dudit dispositif.

De préférence, les mouvements permis par les liaisons sont limités par des moyens du butée appropriés, pour des raisons de sécurité.

Dans un mode de réalisation particulier, la poutre rigide présente au moins une extrémité en forme de fourche. On peut également prévoir une poutre télescopique afin de réduire l'encombrement en dehors de l'utilisation et/ou d'augmenter la hauteur de vol.

Dans une première forme de réalisation, la surface portante et les moyens recevant la personne sont reliés de manière rigide par un châssis qui est relié à la poutre en un point de liaison choisi de façon à rendre l'ensemble stable dans le vent apparent. Dans ce cas, les divers éléments de l'ensemble tournent simultanément dans le plan vertical, des moyens de butée en rotation verticale étant de préférence agencés pour limiter la vitesse de descente de l'ensemble. Ledit châssis peut être en fait constitué soit par les moyens pour recevoir la personne, soit par l'armature de la surface portante.

Dans une autre forme de réalisation, la surface portante et les moyens recevant la personne sont susceptibles de pivoter dans le plan vertical indépendamment les uns des autres, soit que la surface portante et lesdits moyens soient articulés indépendamment sur la poutre, soit que l'un de ces éléments soit seul articulé sur la poutre, l'autre étant articulé sur lui.

Les susdites liaisons sont choisies de façon à assurer au mieux les critères d'équilibre, de sécurité et de confort à chaque instant de l'évolution de l'engin volant.

Dans un mode de mise en oeuvre concernant les engins nautiques à moteur hors-bord, qui sont les engins motorisés les plus concernés par la présente invention, la poutre est reliée à l'arrière de l'engin nautique, tracteur, par un châssis tubulaire entourant à distance le moteur et qui est réglable télescopiquement en fonction de la taille du moteur. De préférence, le châssis tubulaire comprend trois branches disposées en "U", les deux branches parallèles étant télescopiques et munies de moyens d'attache pour la fixation du châssis à l'arrière de l'engin tracteur et l'autre branche portant les moyens d'attache pour la fixation de la poutre et étant télescopique de part et d'autre dudit point d'attache. par cet agencement, le châssis peut être adapté à la taille du moteur sans décentrage du point d'attache de la poutre.

Les moyens pour recevoir une personne au moins sont, de préférence, munis d'un dispositif destiné à assurer ou à contribuer à leur horizontalité quelle que soit la hauteur de vol, pour des raisons de sécurité et de confort. Dans le mode de réalisation dans lequel les moyens pour recevoir une personne au moins et la surface portante peuvent pivoter indépendamment les uns des autres, ce rôle peut être, dans certains cas, assuré simplement par la gravité.

L'engin volant selon l'invention, peut comporter, à sa partie basse, des patins, flotteurs, roues ou une combinaison de ceux-ci. Il apparaît clairement qu'une combinaison incluant des roues permet une utilisation mixte de l'engin volant, à savoir, terrestre et nautique, sans adaptation particulière entre chaque type d'utilisation.

Dans un mode de réalisation très intéressant, l'engin volant comporte des moyens de commande de l'engin motorisé. Les commandes de l'engin motorisé sont transférées par des moyens usuels appropriés, tels que câbles de commande, à l'engin volant. Cela s'applique plus particulièrement à une utilisation en milieu nautique. L'utilisateur de l'engin volant peut piloter à sa guise l'engin motorisé et peut même se passer d'une personne à bord dudit engin motorisé.

L'engin volant selon l'invention peut être gouvernable à l'aide de moyens à la disposition de l'utilisateur. On peut citer, à titre d'exemples, des volets, des gouvernes de profondeur, des ailerons, un gouvernail de direction ou plus simplement un dispositif d'inclinaison de la surface portante comme on le rencontre par exemple sur les delta-planes. L'utilisateur pourra par exemple intervenir activement dans le décollage et pourra également faire décrire des figures à son engin volant.

Les matériaux employés pour la fabrication des différents éléments de l'invention sont judicieusement choisis parmi ceux mis en oeuvre dans les ULM, delta-planes et analogues. Notamment, la suface portante est avantageusement une aile-delta du commerce. Les matériaux formant l'engin volant selon l'invention ont les caractéristiques de résistance, rigidité et légèreté requises.

L'invention va être maintenant décrite plus en détail, pour un engin volant destiné à être tracté, à l'aide d'exemples de réalisation représentés sur le dessin dans lequel :

- la figure 1 représente une vue latérale d'un engin volant conforme à l'invention, dans lequel une poutre simple est reliée au châssis,

- la figure 2 représente une vue latérale d'un autre mode de réalisation de l'invention, dans lequel une poutre, qui présente une extrémité en forme de fourche, est reliée aux moyens recevant la personne,

- la figure 3 est une vue de dessus de l'engin volant représenté sur la figure 2.

- la figure 4 est une vue de dessus d'un dispositif pour l'accrochage de la poutre, selon la figure 1 ou 2, à l'arrière d'un engin motorisé nautique à moteur hors-bord.

- la figure 5 est une vue de la liaison entre la poutre et un bateau tracteur.

- les figures 6 et 7 représentent une variante de l'invention.

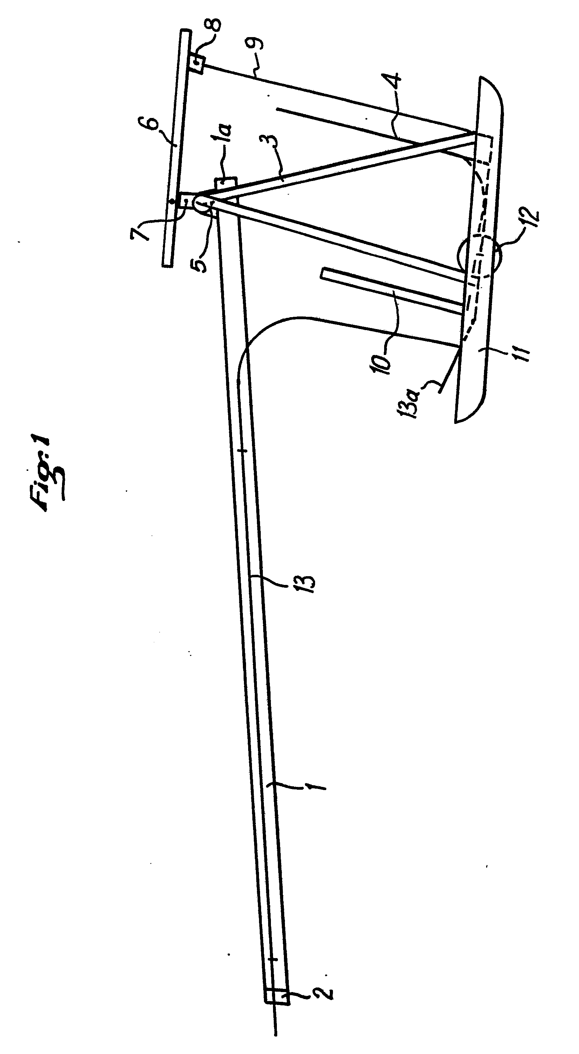

Dans l'exemple de réalisation représenté sur la figure 1, l'engin volant comporte une poutre simple et rectiligne, qui est désignée par le repère 1. Cette poutre 1, par exemple un tube en matière plastique, armée ou non, comporte, à l'une de ses deux extrémités, un dispositif destiné à l'accrochage de l'ensemble à l'arrière de l'engin motorisé terrestre ou nautique. Ce dispositif est agencé de manière à mettre la poutre 1 en mesure d'effectuer un mouvement de pivotement vers le haut qui correspond à l'élévation de l'engin volant dans les airs ou à sa descente, ainsi qu'un mouvement de pivotement dans un plan horizontal. Ce dispositif symboliquement représenté sur la figure 1 par un rectangle désigné par le repère 2, comporte un ensemble de butées agencées de manière à empêcher, en rotation verticale et horizontale, l'engin volant de passer au-delà du plan vertical passant par l'arrière de l'engin tracteur. On détaillera plus loin la partie d'un tel dispositif d'accrochage dans une application à un engin nautique à moteur hors-bord.

L'engin volant comporte un châssis 3, par exemple un châssis tubulaire, supportant des moyens pour recevoir une personne ou siège 4. Ce châssis 3 est relié, en un point de sa partie supérieure, à l'extrémité 1a de la poutre 1 opposée au dispositif 2, par une articulation 5 procurant un degré de liberté en rotation dans le plan vertical. Ce mécanisme est également muni de butées, non visibles, destinées à limiter le débattement dans les deux sens pour empêcher un choc du châssis contre la poutre.

Une aile ou surface portante 6 est reliée à l'extrémité 1a de la poutre 1, par l'intermédiaire d'une articulation 7 qui procure un degré de liberté en rotation verticale. La surface portante est donc inclinable, ce qui non seulement favorise le décollage et l'atterrissage, mais aussi permet à l'utilisateur de faire varier la hauteur de vol à son gré. La surface portante 6 comporte à cet effet un point d'attache 8 qui est situé à l'arrière et au centre de la surface portante 6 et reçoit un câble 9 relié à un levier de commande 10 placé à portée de l'utilisateur.

Il va de soi qu'il serait possible de prévoir d'autres moyens d'nclinaison, par exemple à l'avant et sur les côtés, afin d'accroître les capacités d'évolution l'articulation 7 étant modifiée en conséquence.

Le châssis 3 comporte, à sa partie inférieure, un ensemble de flotteurs 11 et roues 12 permettant le décollage et l'atterrissage sur terre comme en milieu nautique.

Enfin, l'utilisateur a la possibilité de diriger lui-même l'engin tracteur grâce à un transfert des commandes de l'engin tracteur à l'engin volant. Ce transfert est assuré par un mécanisme comprenant notamment des câbles, articulations et commandes au pied. La figure 1 illustre ce mécanisme symboliquement, à l'aide d'un câble 13 et d'une pédale 13a.

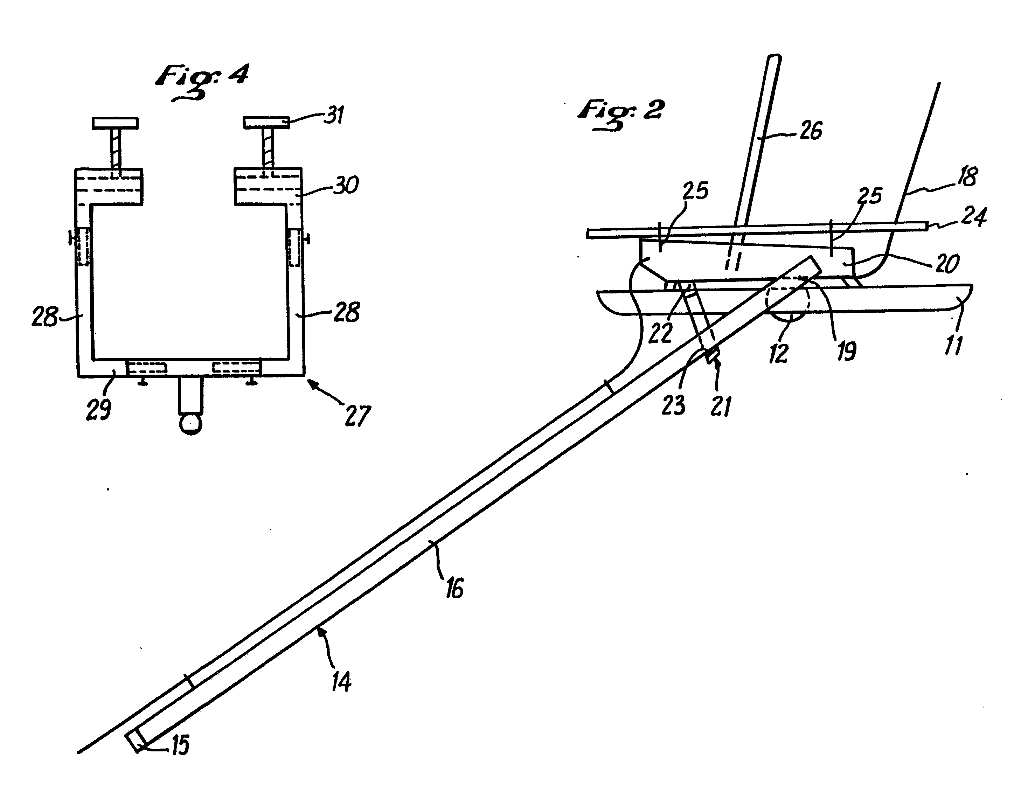

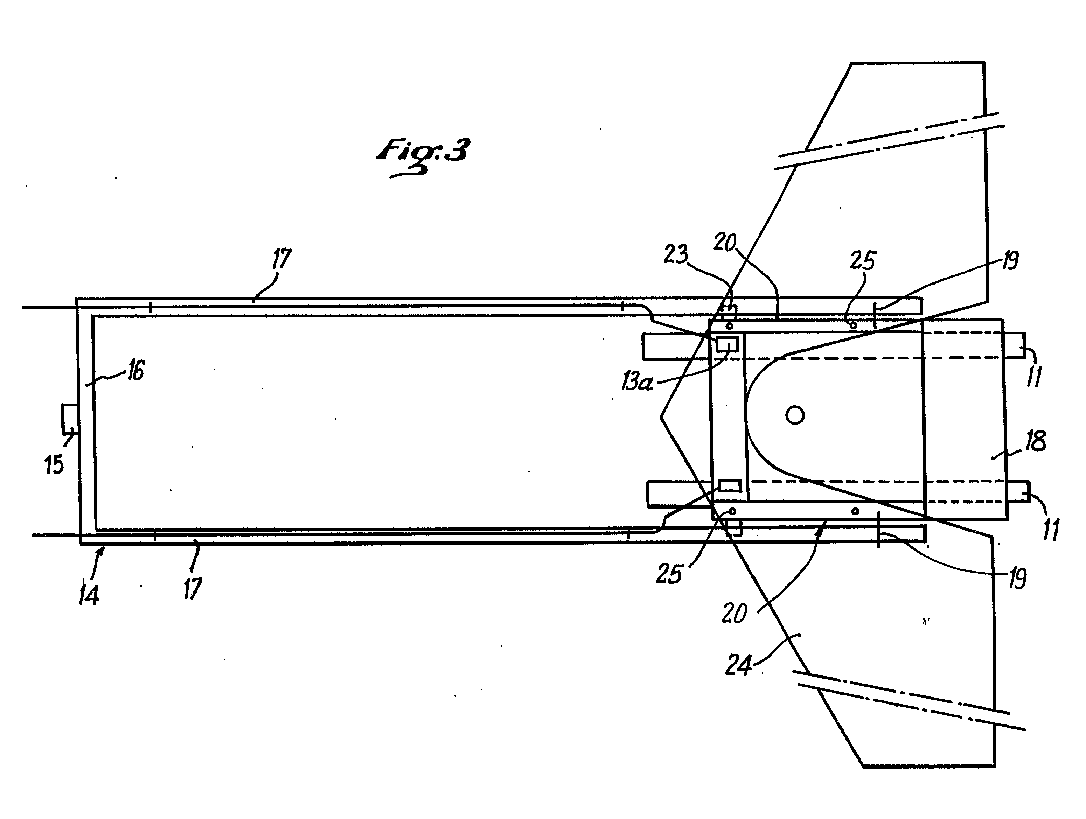

Dans un autre mode de réalisation qui est représenté sur les figures 2 et 3, l'engin volant comporte une poutre rigide 14 constituée de deux parties, l'une simple représentée partiellement sur les figures 2 et 3 et désignée par le repère 15, l'autre 16 en forme de fourche dans un plan horizontal qui comporte deux branches 17.

La partie de poutre 15 est destinée à être reliée à un engin tracteur de la même manière que dans l'exemple de réalisation précédent.

La partie de poutre 16 est relié par ses branches 17 à des moyens pour recevoir une personne, ou siège 18 rigide. Cette liaison est assurée par des pivots 19, un pour chaque branche 17, qui sont fixés sur des côtés latéraux 20 du siège 18 en un point choisi de façon à rendre l'ensemble stable dans le vent apparent et qui s'étendent de façon orthogonale par rapport auxdits côtés latéraux 20. Ces pivots 19 procurent donc un degré de liberté en rotation verticale. Ces pivots 19 sont en outre muni de moyens, non représentés, destinés à limiter la vitesse de descente de l'engin volant.

Le débattement du mouvement procuré par ces pivots est limité par des butées 21 mobiles autour d'un axe 22 orthogonal aux côtés latéraux 20 du siège 18. Ces butées 21 présentent, à leur extrémité inférieure, une surface de butée 23 dirigée vers le haut. Ces surfaces de butée 23 sont destinées à empêcher un basculement excessif de l'engin vers l'arrière par action sur les branches 17 de la poutre 14. Ces butées 21 sont repliées de façon appropriée au voisinage du siège 18 lors de l'atterrissage et du décollage. Par cet agencement, les butées sont opérationnelles quelle que soit la hauteur du vol après le décollage ou avant l'atterrisage.

Une surface portante 24 est relié aux côtés latéraux 20 du siège 18 par des moyens 25 au nombre de deux de chaque côté et qui sont situés au voisinage de chacune des extrémités desdits côtés 20. Ces moyens 25 sont agencés de manière que les deux moyens 25 placés aux extrémités avant des côtés latéraux 20 sont actionnés en sens inverse de ceux placés aux extrémités arrière lors de la manoeuvre d'un levier de commande 26 qui est à la disposition de l'utilisateur, afin d'incliner, dns un sens ou dans l'autre, la surface portante 24. Par exemple les moyens 25 avant sont des pivots horizontaux fixés sur le châssis et autour desquels l'aile 24 peut pivoter et les moyens 25 arrière sont des extrémités de tringles qui sont abaissées ou relevées par action sur le levier 26.

Comme on le voit sur la figure 2, la surface portante 24 est placé légèrement au-dessus des côtés latéraux 20 du siège 18. pour laisser le passage au levier de commande 26, au dossier du siège 18 et à l'utilisateur, la surface portante est découpée de façon appropriée, comme on peut le voir sur la figure 3.

Enfin, dans ce mode de réalisation comme dans le précédent, l'engin volant est muni de flotteurs 11 et de roues 12, ainsi que de câbles 13 et pédales 13a pour la commande de l'engin tracteur.

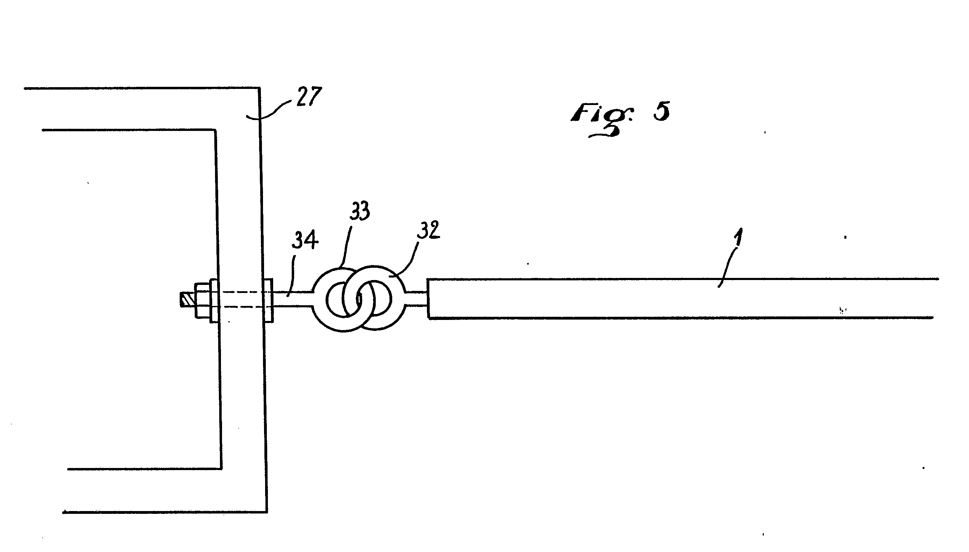

Dans un mode de réalisation intéressant, selon la figure 5, l'engin volant selon l'invention comporte au moins un moyen d'articulation 2 permettant la rotation dans toutes les directions, par exemple un ensemble de deux anneaux entrelacés 32, 33, disposés en un point approprié de la poutre, en particulier à l'extrémité destinée à être reliée à l'engin tracteur et/ou à l'extrémité opposée. La tige 34 peut être, par exemple, libre en rotation.

La figure 4 est une vue de dessous d'un dispositif pour l'accrochage de la poutre à 1 arrière d'un engin nautique à moteur hors-bord et autour du moteur.

Ce dispositif comprend un châssis tubulaire 27 formé de trois branches disposées en "U", les deux branches parallèles étant désignées par le repère 28. L'autre branche, 29, porte les moyens d'articulation destinés à coopérer avec la poutre. Ces branches 29, 30 sont télescopiques, de sorte que le châssis soit adaptable à toutes les tailles de moteurs hors-bord. La branche 29 est agencée de manière à être télescopique de part et d'autre des moyens d'articulation qu'elle porte, de sorte qu'elle puisse être adaptée sans décentrage du point d'attache de la poutre.

Les branches 28 sont munies à leur extrémité libre de moyens d'attache destinés à la fixation dudit dispositif à l'arrière de l'engin motorisé. Dans cet exemple de réalisation, il s'agit, pour chaque branche 28, d'une pièce en "U" 30 qui vient s'adapter sur le tableau du bateau, le maintien étant assuré par une vis de pression 31.

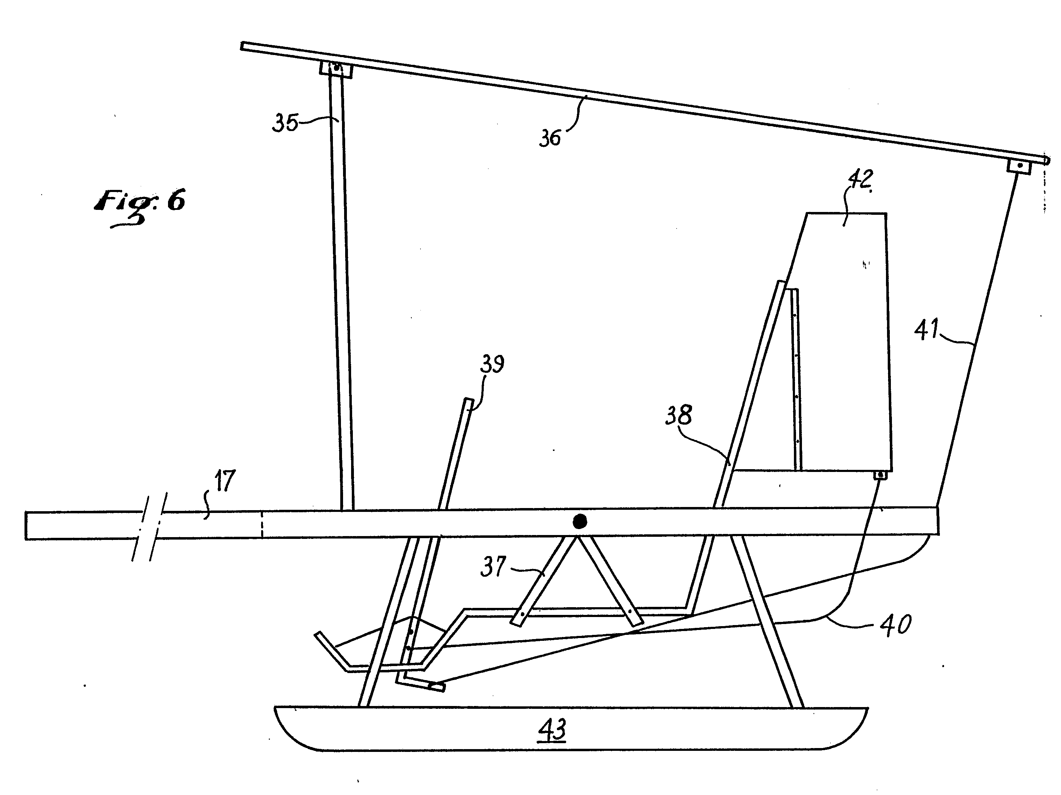

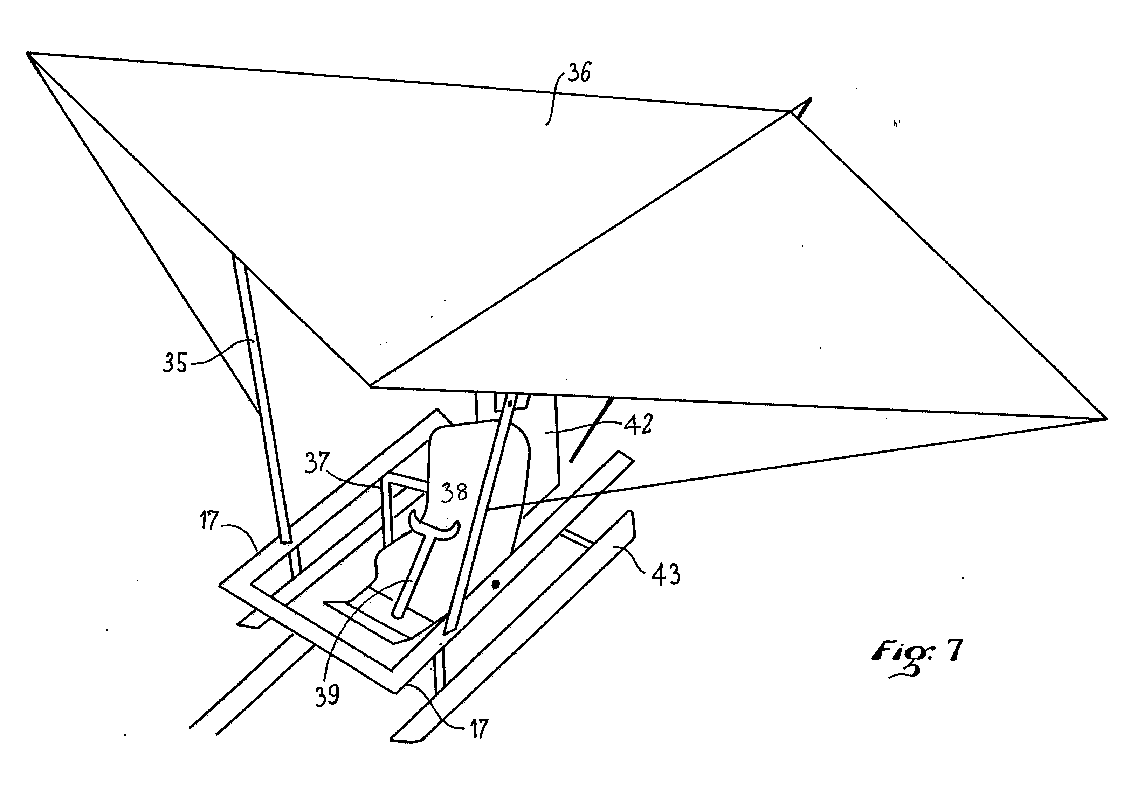

On se réfère aux figures 6 et 7.

Dans cette forme de réalisation, les branches 17 sont rigidement reliées à deux tubes rigides 35 orientés vers le haut et supportant, à leur extrémité supérieure la nervure antérieure d'une aile delta 36. Un châssis 37 est suspendu entre les branches 17 et porte un siège 38 et un levier de commande 39 qui actionne, par des câbles 40,41, une dérive 42 et l'aile 36. Des flotteurs 43 sont portés par les branches 17. Au lieu d'être monté sur les châssis 37, le levier 39 pourrait être monté sur une traverse solidaire des branches 27.

On comprend donc que, dans l'invention, l'aile peut être portés soit par la poutre, soit par un châssis ou une structure articulée ou suspendue sur la poutre.

**Revendications**

1. Engin volant qui comporte un ensemble comprenant une surface portante (6,24) et des moyens pour recevoir une personne au moins (4,18), reliés à ladite surface portante, caractérisé en ce qu'il comporte en outre au moins une poutre rigide (1,14) qui est reliée audit ensemble par l'une de ses deux extrémités et qui, à son autre extrémité, est agencée de manière à pouvoir être reliée à un engin motorisé terrestre ou nautique, les deux liaisons réalisées procurant chacune au moins un degré de liberté en rotation dans un plan vertical et l'une au moins des liaisons procurant au moins un degré de liberté supplémentaire, notamment en rotation dans un plan horizontal.

2. Engin volant selon la revendication 1, caractérisé en ce que les mouvements permis par les liaisons sont limités par des moyens de butée appropriés.

3. Engin volant selon la revendication 1, caractérisé en ce que la poutre rigide (14) présente au moins une extrémité en forme de fourche (16).

4. Engin volant selon la revendication 1 ou 3, caractérisé en ce que la poutre rigide (1,14) est télescopique.

5. Engin volant selon l'une des revendications 1 à 4, caractérisé en ce que la surface portante (24) et les moyens pour recevoir une personne au moins (18) sont reliés de manière rigide par un châssis qui est relié à la poutre (14) en un point de liaison choisi de façon à rendre l'ensemble stable dans le vent apparent.

6. Engin volant selon l'une des revendications 1 à 4, caractérisé en ce que la surface portante (6) et les moyens pour recevoir une personne au moins (4) sont articulés indépendamment sur la poutre (1).

7. Engin volant selon l'une des revendications 1 à 4, caractérisé en ce que l'un, parmi les moyens pour recevoir une personne au moins (18) et la surface portante (24), est articulé sur la poutre (14), l'autre étant articulé sur le premier de façon à être indépendant de la rotation du premier.

8. Engin volant selon l'une des revendications précédentes, dans son application à un engin nautique tracteur à moteur hors-bord, caractérisé en ce que la poutre est reliée à l'arrière de l'engin nautique par un châssis tubulaire (27) entourant à distance le moteur et qui est réglable télescopiquement en fonction de la taille du moteur.

9. Engin volant selon la revendication 8, caractérisé en ce que le châssis tubulaire (27) comprend trois branches (28,29) disposées en "U", les deux branches (28) parallèles étant télescopiques et munies de moyens d'attache pour la fixation du châssis à l'arrière de l'engin tracteur et l'autre branche (29) portant les moyens d'attache pour la fixation de la poutre et étant télescopique de part et d'autre dudit point d'attache.

10. Engin volant selon l'une des revendications précédentes, caractérisé en ce que les moyens pour recevoir une personne au moins sont munis d'un dispositif assurant leur horizontalité quelle que soit la hauteur de vol.

11. Engin volant selon l'une quelconque des revendications précédentes, caractérisé en ce qu'il comporte, à sa partie basse, des patins, flotteurs (11), roues (12), ou une combinaison de ceux-ci.

12. Engin volant selon l'une quelconque des revendications précédentes, caractérisé en ce qu'il comporte des moyens de commande de l'engin tracteur.

13. Engin volant selon l'une quelconque des revendications prédédentes, caractérisé en ce que l'engin volant est gouvernable l'aide de moyens à la disposition de l'utilisateur.

Fig.1

*Fig. 4*

31

30

28    28

29    27

*Fig. 2*

26

25    25    18

24

20

22    12    19    11

23    21

16

14

15

EP 0 354 110 A1

Fig.3

*Fig. 5*

EP 0 354 110 A1

Fig. 6

EP 0 354 110 A1

*Fig. 7*

36

35

42

43

17

37

38

39

17

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | AT-A- 299 718 (FEKESA)<br>* Page 1, lignes 1-17; figures 1,2 *<br>--- | 1,5,8,<br>11 | B 64 C 31/06<br>B 64 C 31/02<br>B 60 V 1/22 |
| A | DE-A-3 245 719 (TREUMANN)<br>* Page 10, ligne 8 - page 11, ligne 4;<br>figure 1 *<br>----- | 1,5 | |

DOMAINES TECHNIQUES
RECHERCHES (Int. Cl.5)

B 64 C
B 60 V
B 63 B

Le présent rapport a été établi pour toutes les revendications

| Lieu de la recherche | Date d'achèvement de la recherche | Examinateur |
|---|---|---|
| LA HAYE | 07-11-1989 | ZERI A. |